# FASCICULE DE BREVET EUROPEEN

(11) **EP 0 846 067 B1**
(45) Date de publication et mention de la délivrance du brevet: **01.08.2001**
(21) Numéro de dépôt: 96903067.5
(22) Date de dépôt: 07.02.1996
(51) Int. Cl.: B60R 13/10

(54) **PLAQUE MINERALOGIQUE POUR LES VEHICULES AUTOMOBILES A DEUX ROUES ET PLUS**
ZERBRECHBARES KRAFTFAHRZEUG-KENNZEICHENSCHILD
NUMBER PLATE FOR MOTOR VEHICLES WITH TWO OR MORE WHEELS

(43) Date de publication de la demande: 10.06.1998
(73) Titulaire: Spezia, Albert Joseph, 83400 Hyères (FR)
(72) Inventeur: Spezia, Albert Joseph, 83400 Hyères (FR)
(86) Numéro de dépôt international: FR9600204
(87) Numéro de publication internationale: WO9626632

(56) Documents cités:
- DE-A- 2 537 078
- FR-A- 651 106
- US-A- 2 194 725
- US-A- 2 258 754

## Description

La présente invention concerne la plaque d'immatriculation pour les véhicules automobiles, d'un modèle et d'une composition inédite. La nouvelle plaque est appelée " plaque St Christophe ". Son originalité tient au fait qu'elle est fabriquée en matériau cassable.

La plaque St Christophe, apposée à l'avant, même des motocyclettes, et à l'arrière de tous les véhicules, est la chosification d'une technique nouvelle de sécurité routière imaginée pour irradiquer le fléau inqualifiable des accidents de la route.

Elle a pour objet de conduire à la connaissance de la vérité sur la maitrise du véhicule, l'important, et c'est un fait réel, étant qu'elle porte témoignage d'une bonne conduite 24 heures sur 24.

Cet objet est atteint grâce à une plaque d'immatriculation comportant les caractéristiques définies dans la revendication 1.

La technique nouvelle est à l'opposé du système actuel qui consiste par des règles abstraites à transformer tous les conducteurs en chauffards virtuels, avec la plaque St Christophe, seuls les responsables du défaut de maîtrise du véhicule seront inquiètes. Actuellement les plaques en tôle anodine ont un rôle passif, dénué de tout intérêt sur le plan technique de la lutte contre les accidents de la route, effectuant un tournant à 180° la plaque en tôle peut-être remplacée par la plaque St Christophe d'une conception tout à fait nouvelle, elle est créée pour devenir l'organe essentiel, la cheville ouvrière de la sécurité routière.

La plaque St Christophe se fractionne aux chocs d'une force à étalonner, mais elle reste en place maintenue par le treillis intérieur.

Une plaque cassable sous l'effet d'un choc et présentant les caractéristiques définies dans le préambule de la revendication 1 est connue de US-A-2258754. Le but de cette plaque connue est cependant different puisqu'elle conduit à l'éparpillement sur le sol des petits morceaux comme indices permettant d'identifier le véhicule impliqué dans l'accident.

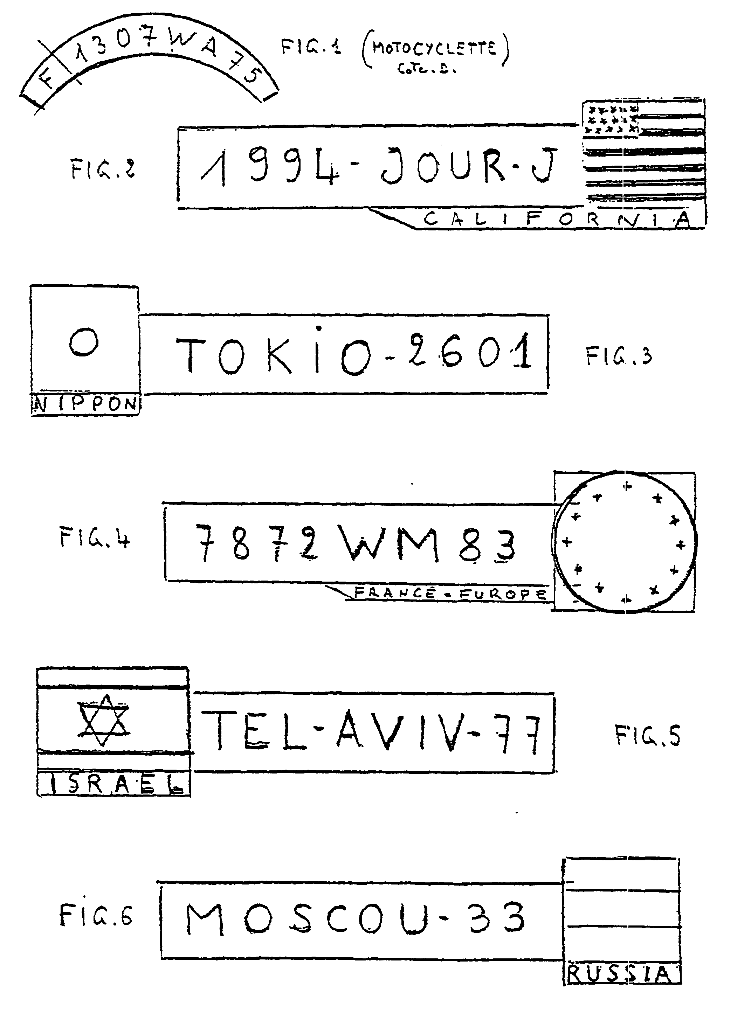

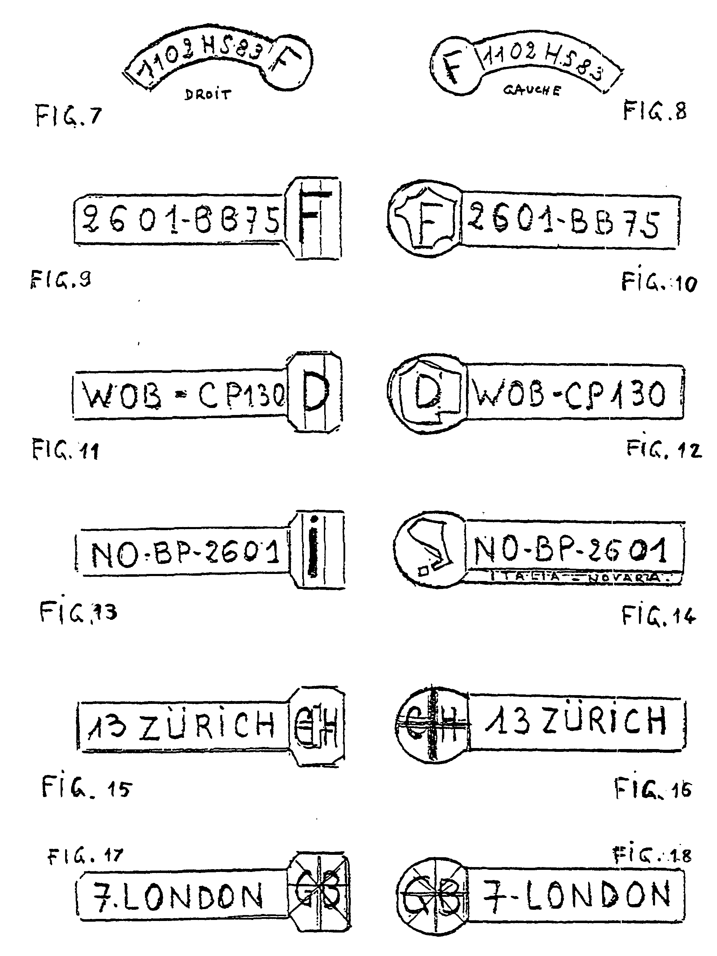

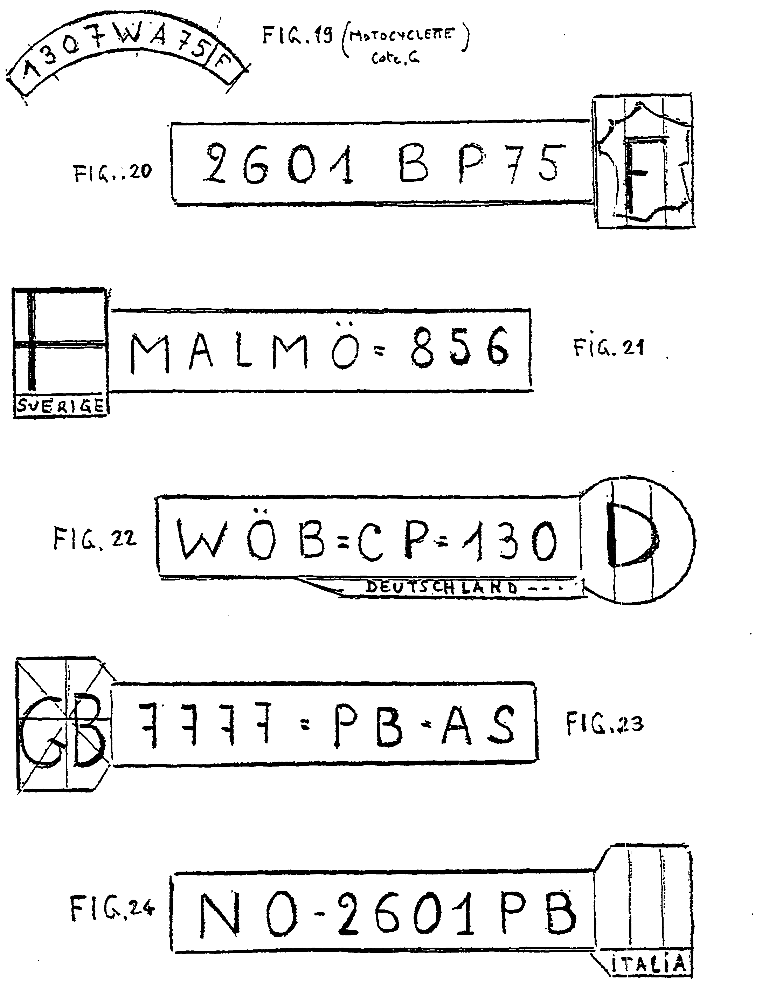

Les figures 1 à 24 montrent différents exemples de plaques construites selon l'invention.

Le corps de la plaque St Christophe peut-être fabriqué de matériaux très différents, elle peut-être en terre cuite armée, en faïence armée, en porcelaine armée, en verre armé et trempé, voire en matière plastique ou composite, ou en tout autre matériau cassable, pourvu qu'elle se disloque au premier choc, aux découpes préétablies genre " puzzle "... ( le mot armé signifie la présence à l' intérieur de la plaque d'un treillis de fils de fer fin d'une maille de 1 à 2 centimètres carrés environ, le treillis solidaire des fixations de la plaque), la plaque est enserrée d'un film très adhésif sur une ou deux faces, la face visible présente l'immatriculation et l'identité du pays où le vehicule est immatriculé.

La plaque St Christophe se doit d'être en verre, minéral ou organique, ou en verre sandwich, notamment pour la fabrication de la plaque avant des motocyclettes, où l'immatriculation figure de chaque côté de la plaque, la fixation de la plaque sur le garde-boue étant la aussi solidaire du treillis.

Pour résumer, il est créé une plaque d'immatriculation automobile nouvelle, sa caractéristique, elle est cassable, son nom : la plaque St Christophe, elle a été imaginée pour être une pièce principale du véhicule, sur le plan de la conduite intrinsèque du véhicule, sensible et vulnérable, elle peut-être facilement controlée puisque suivant le C.R. articles 99 et III, elle est obligatoirement à demeure à l'avant et à l'arrière des véhicules.

Elle est l'objet qui nous conduit à la connaissance de la vérité en matière de maîtrise du véhicule.

La détérioration des plaques dûment déclarée ou constatée, la cause analysée, et la sanction appliquée tout de suite, ce processus nouveau rapide et juste, est de nature à dissuader les conducteur d'être imprudents, d'autant que désormais les pouvoirs publics forts de la réalité justifiée par le bris des plaques, pourront prévoir d'aller jusqu'à restreindre le libre usage du véhicule.

Cette méthode nouvelle de sécurité routière a le mérite à court terme d'atténuer la psychose des bons conducteurs tourmentés par la hantise de se faire bousculer par l'arrière.

La plaque St Christophe est la clé de voute d'un système simple, elle est de fabrication simple, sa mise en place et le contrôle du suivi tout aussi simple, son objectif : en France pays du dépôt de l'invention " sauver 5000 vies et 50.000 blessés par an ".

La vocation internationale de cette plaque lui permet d'envisager de meilleurs résultats encore.

## Revendications

1. Plaque d'immatriculation automobile destinée à être montée à l'avant et à l'arrière d'un véhicule par des moyens de fixation et dont le corps est fabriqué d'un matériau cassable apte à se disloquer sous l'effet d'un choc et comporte des découpes préétablies à la manière d'un puzzle, ladite plaque présentant sur sa face visible l'immatriculation et l'identité du pays où le véhicule est immatriculé, caractérisée en ce qu'elle comporte une armature située à l'intérieur du corps de la plaque et constituée d'un treillis de fils de fer fin d'une maille de 1 à 2 centimètres carré environ, ledit treillis étant solidaire desdits moyens de fixation et la plaque étant enserrée d'un film adhésif sur une ou deux faces.

2. Plaque d'immatriculation selon la revendication 1 caractérisée en ce que ledit matériau cassable peut être choisi parmi les matériaux tels que la terre cuite, la faïence, la porcelaine, le verre trempé, les matières plastiques ou composites.

3. Plaque d'immatriculation selon la revendication 1 caractérisée en ce edit matériau cassable est un verre minéral ou organique, ou un verre sandwich, permettant la fabrication de la plaque avant de motocyclette où l'immatriculation figure de chaque côté de la plaque, les moyens de fixation de la plaque sur le garde-boue étant là aussi solidaire du treillis.

## Patentansprüche

1. Automobilkennzeichenschild zum Montieren an der Front- und an der Heckseite eines Fahrzeugs mit Befestigungsmitteln, deren Körper aus zerbrechlichem Werkstoff gefertigt ist, der unter Stoßeinwirkung auseinander fällt und Vorschnitte enthält, die wie bei einem Puzzle angebracht werden, wobei das Schild auf seiner sichtbaren Seite die Kennzeichen und Identität des Landes trägt, in dem das Fahrzeug zugelassen ist, gekennzeichnet dadurch, dass das Kennzeichenschild im Inneren des Schildkörpers über eine Verstärkung bestehend aus einem eisendrahtgeflecht mit einer Maschenweite von ca. 1 bis 2 Quadratzentimetern verfügt, das fest mit den besagten Befestigungsmitteln verbunden ist, während das Schild an einer oder an beiden Oberflächen mit einer Klebefolie versehen ist.

2. Kennzeichenschild gemäß dem Anspruch 1, gekennzeichnet dadurch, dass der besagte zerbrechliche Werkstoff aus Werkstoffen wie zum Beispiel Terrakotta, Steingut, Porzellan, Sicherheitsglas, Kunststoffen oder Kompositwerkstoffen bestehen kann.

3. Kennzeichenschild gemäß dem Anspruch 1, gekennzeichnet dadurch, dass der besagte zerbrechliche Werkstoff ein anorganisches oder organisches Glas oder Schichtglas ist, das die Herstellung des vorderen Kennzeichenschilds von Motorrädern erlaubt, wobei das Kennzeichen an beiden Schildseiten steht und die Befestigungsmittel für das Schild auf dem Kotflügel ebenfalls fest mit dem Geflecht verbunden sind.

## Claims

1. Car registration plate intended to be set on the front and the back of a vehicle by normal fixing means and whose body is made of a breakable material fit to break under the effect of a shock, and including pre-established cuts in the way of a puzzle, this plate having on its visible side the number and the identity of the country where the vehicle is registered.
It includes inside the body of the plate a frame made up of a thin wire mesh with stitches of about 1 to 2 square centimeters, this mesh being joined to the fixing means, and the plate being enclosed in an adhesive film on one or two sides.

2. Registration plate according to the revendication 1 characterized because the material can be chosen among materials such as baked clay, faience, porcelain, toughened glass, plastic or composite materials.

3. Registration plate according to revendication 1 characterized because the breakable material is a mineral or organic glass or a sandwich glass which renders possible the making of the front plate for motorbikes where the number is written on each side of the plate.
The fixing means of the plate on the mudgard being here also tightly joined to the wire mesh.
